# EUROPÄISCHE PATENTSCHRIFT

(11) **EP 3 205 078 B1**
(45) Veröffentlichungstag und Bekanntmachung des Hinweises auf die Patenterteilung: **15.08.2018**
(21) Anmeldenummer: 15763492.4
(22) Anmeldetag: 05.09.2015
(51) Int. Cl.: H04M 1/60, H04M 1/725, H04W 4/02

(54) **VERFAHREN ZUM BETREIBEN EINES KRAFTFAHRZEUGS UND KRAFTFAHRZEUG**
METHOD FOR OPERATING A MOTOR VEHICLE, AND MOTOR VEHICLE
PROCÉDÉ POUR FAIRE FONCTIONNER UN VEHICULE AUTOMOBILE ET VEHICULE AUTOMOBILE

(30) Priorität: 07.10.2014 DE 102014014601
(43) Veröffentlichungstag der Anmeldung: 16.08.2017
(73) Patentinhaber: Audi AG, 85045 Ingolstadt (DE)
(72) Erfinder: KÖHLER, Linda, 85057 Ingolstadt (DE); BOOS, Barbara, 82467 Garmisch-Partenkirchen (DE)
(86) Internationale Anmeldenummer: PCT/EP2015/001791
(87) Internationale Veröffentlichungsnummer: WO 2016/055135

(56) Entgegenhaltungen:
- US-A1- 2003 134 660
- US-A1- 2012 231 773

## Beschreibung

Die Erfindung betrifft ein Verfahren zum Betreiben eines Kraftfahrzeugs mit einer Kommunikationseinrichtung, mit einem mit der Kommunikationseinrichtung gekoppelten Navigationssystem sowie mit einer Analyseeinrichtung. Sie betrifft ferner ein Kraftfahrzeug mit einer Kommunikationseinrichtung, mit einem mit der Kommunikationseinrichtung gekoppelten Navigationssystem und mit einer Analyseeinrichtung.

In Kraftfahrzeugen von heute besteht die Möglichkeit, über eine dem Kraftfahrzeug eigene Kommunikationseinrichtung mobil zu kommunizieren. Bei der Kommunikationseinrichtung kann es sich hier um ein Autotelefon oder beispielsweise auch um eine Freisprechanlage handeln, mit welcher dann z.B. ein Mobiltelefon gekoppelt wird. Dem Fahrer ist es nun jederzeit möglich, auf die Kommunikationseinrichtung und/oder das gekoppelte Mobiltelefon zuzugreifen, und umgekehrt kann der Fahrer ebenso jederzeit über das Mobiltelefon und/oder die Kommunikationseinrichtung kontaktiert werden. Geht während einer Fahrt ein Anruf oder eine Nachricht ein, so werden diese umgehend an den Fahrer über die Kommunikationseinrichtung weitergeleitet. Dies äußert sich beispielsweise akustisch in Form eines Klingeltons und/oder visuell als Hinweis in einem Display des Kraftfahrzeugs.

Aus der US 2012/0231773 A1 ist ein System zum Aktivieren, Deaktivieren oder Wiederherstellen von Funktionen eines für eine drahtlose Kommunikation geeigneten mobilen Gerätes ("cellPhone") in einem Fahrzeug bekannt. Ausschlaggebend ist dabei, ob sich das jeweilige Gerät innerhalb einer aus einem oder mehreren Quadern zusammengesetzten Zone befindet, was beispielsweise durch ein satellitengestütztes Positionierungssystem oder innerhalb des Fahrzeugs auch durch ein Ultraschallsystem bestimmt wird. Ziel ist es, Störungen oder Ablenkungen durch mobile Geräte zu vermeiden.

Aus der US 2003/0134660 A1 ist eine Methode zum Betreiben eines mobilen elektronischen Geräts innerhalb eines mit einem Bordcomputer ausgestatteten Kraftfahrzeugs bekannt, wobei das eine oder mehrere Funktionen des mobilen Gerät durch den Bordcomputer deaktiviert und durch weitere Rekonfigurationsanweisungen des Bordcomputers das mobile Gerät als Slave-Gerät des Bordcomputers eingerichtet wird. In Folge können dann Funktionen des Bordcomputers anstelle der entsprechenden Funktionen des mobilen Geräts genutzt werden, wobei außerdem vorgesehen ist, dass der Zugriff der Passagiere auf bestimmte Funktionen des Bordcomputers in Abhängigkeit von das Fahrzeug beeinflussenden Bedingungen ebenso limitiert werden kann wie bestimmte Funktionen des mobilen Gerätes in Abhängigkeit eines Ortes.

Die DE 199 34 105 A1 offenbart ein bedienbares Gerät, beispielsweise ein Autotelefon oder ein Radio, welches in gefährlichen Fahrsituationen durch eine Entscheidungsvorrichtung in seinem Funktionsumfang eingeschränkt wird. Die gefährlichen Fahrsituationen umfassen hier insbesondere Situationen, in denen das Kraftfahrzeug schneller als eine vorgegebene Geschwindigkeit bewegt wird. Für ein Sperren von eingehenden sowie ausgehenden Anrufen können hier je unterschiedliche Geschwindigkeitsgrenzwerte vorgesehen sein.

Die DE 102 26 425 A1 offenbart ein Verfahren zum Unterstützen eines Fahrers eines Kraftfahrzeugs bei der Entgegennahme von Anrufen. Dort wird bei Eintreffen eines Anrufs in Abhängigkeit einer aktuellen Fahrerbeanspruchung beziehungsweise der Fahrsituation geprüft, ob der Fahrer zur Entgegennahme von Anrufen in der Lage ist. Ist letzteres nicht der Fall, wird geprüft, ob die Entgegennahme innerhalb einer vorgegebenen Zeit erfolgen kann. Ist dies der Fall, wird eine entsprechende Mitteilung oder Pausenüberbrückung übertragen. Andernfalls erfolgt eine Durchschaltung zu einem Speicher beziehungsweise Anrufbeantworter.

Die DE 10 2010 056 177 A1 offenbart ein Verfahren zum Betreiben eines Kraftfahrzeugs mit einer Kommunikationseinrichtung, bei dem eine Verfügbarkeit der Kommunikationseinrichtung in Abhängigkeit von zumindest einem Kriterium gesteuert wird, wobei der Fahrer mittels einer Schnittstelleneinrichtung über ein Erfüllen des zumindest einen Kriteriums informiert wird, wenn die Kommunikationseinrichtung nicht verfügbar ist.

Es ergibt sich die Aufgabe, das Betreiben eines Kraftfahrzeugs, welches mit einer Kommunikationseinrichtung ausgestattet ist, sicherer zu gestalten.

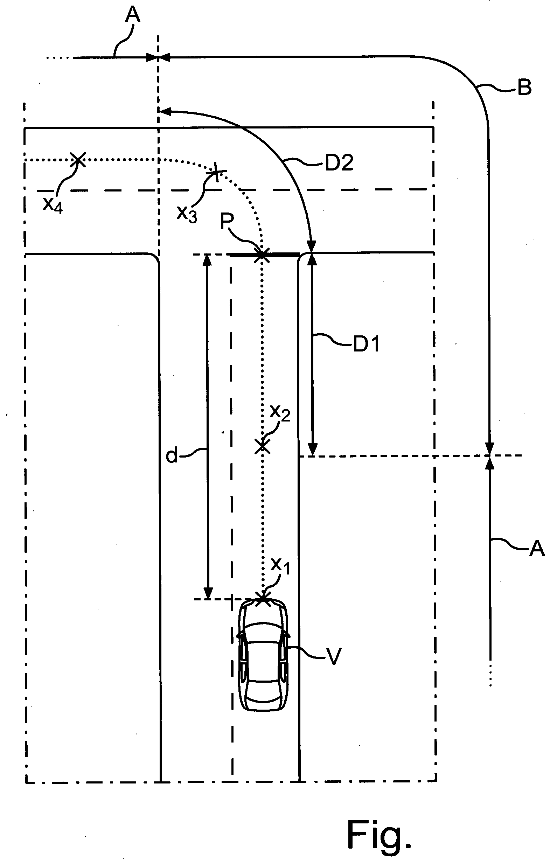

Diese Aufgabe wird durch die Gegenstände der unabhängigen Patentansprüche gelöst. Vorteilhafte Ausführungsformen ergeben sich aus den abhängigen Patentansprüchen, der Figur und der Figurenbeschreibung.

Die Erfindung betrifft ein Verfahren zum Betreiben eines Kraftfahrzeugs mit einer Kommunikationseinrichtung, mit einem mit der Kommunikationseinrichtung gekoppelten Navigationssystem sowie mit einer Analyseeinrichtung. Die Analyseeinrichtung kann dabei teilweise oder ganz Teil von Kommunikationseinrichtung und/oder Navigationssystem sein. Es können also Funktionen der Analyseeinrichtung entweder von der Kommunikationseinrichtung oder dem Navigationssystem übernommen werden. Zum Ziele einer erhöhten Sicherheit bei dem Betreiben des Kraftfahrzeugs umfasst das Verfahren eine Reihe von Schritten. Ein erster Schritt ist ein Definieren einer einen Fahrer des Kraftfahrzeugs beanspruchenden Fahrsituation, insbesondere auch mehrerer solcher Fahrsituationen, in Abhängigkeit einer Position des Kraftfahrzeugs. Unter einer den Fahrer beanspruchenden Fahrsituation ist hier insbesondere eine den Fahrer in besonderem Maße, das heißt, in einem über die durchschnittliche Beanspruchung hinausgehenden Maße, beanspruchende Fahrsituation zu verstehen. Diese Fahrsituation kann beispielsweise ein Abbiegen und/oder ein Anhalten, z.B. an einer Kreuzung und/oder einen Spurwechsel, z.B. an einer Abzweigung, umfassen. Ein weiterer Schritt ist das Vorgeben zumindest einer Position, an welcher eine den Fahrer des Kraftfahrzeugs beanspruchende Fahrsituation erwartet wird, durch die Analyseeinrichtung. Beispielsweise können im Navigationssystem Positionen von Straßenkreuzungen ausgewählt und vorgegeben werden. Ein nächster Schritt ist das Festellen einer Entfernung des Kraftfahrzeugs von der vorgegebenen Position sowie ob ein Annähern und ob ein Entfernen des Kraftfahrzeugs von der vorgegebenen Position erfolgt, durch die Analyseeinrichtung. Es folgt ein Überprüfen, ob die festgestellte Entfernung kleiner ist als eine erste vorbestimmte Entfernung, falls das Kraftfahrzeug sich an die vorgegebene Position annähert und ob die festgestellte Entfernung kleiner ist als eine zweite vorbestimmte Entfernung, falls das Kraftfahrzeug sich von der vorgegebenen Position entfernt. Dieses Feststellen erfolgt durch die Analyseeinrichtung. Schließlich erfolgt ein Unterbinden eines Kommunizierens über die Kommunikationseinrichtung durch die Kommunikationseinrichtung, falls die Entfernung jeweils kleiner als die erste oder die zweite Entfernung ist. Sowohl die erste also auch die zweite Entfernung sind hier insbesondere größer als Null. Das Unterbinden kann insbesondere auch teilweise erfolgen, sich also auf eine Teilfunktionalität der Kommunikationseinrichtung beziehen. Das hat den Vorteil, dass ein Ablenken des Fahrers bereits im Vorfeld einer beanspruchenden Fahrsituation unterbunden wird. Somit kann der Fahrer seine volle Aufmerksamkeit auf die beanspruchende Fahrsituation lenken, was in einer erhöhten Sicherheit bei dem Betreiben des Kraftfahrzeugs resultiert. Gerade auch das Unterbinden des Kommunizierens, auch bei dem Entfernen der Position, an welcher eine beanspruchende Fahrsituation erwartet wird, erhöht hier die Sicherheit, da sich gezeigt hat, dass die Aufmerksamkeit und Reaktionsfähigkeit eines Fahrers auch nach einer beanspruchenden Fahrsituation nicht unmittelbar seine ursprüngliche oder gewöhnliche Höhe erreicht.

In einer vorteilhaften Ausführungsform bezieht sich das Verfahren auf eine Kommunikationseinrichtung, welche über eine Datenübertragungsschnittstelle mit einem, insbesondere nicht fest im Kraftfahrzeug eingebauten Mobiltelefon gekoppelt ist und welche insbesondere eine Freisprecheinrichtung umfasst. Das hat den Vorteil, dass die Sicherheit auch bei der Nutzung persönlicher, also nicht einem Kraftfahrzeug zuordenbarer Mobiltelefone, wie sie allgemein Verwendung finden, erhöht ist.

In einer bevorzugten Ausführungsform ist vorgesehen, dass das Kommunizieren zumindest eine der folgenden Aktivitäten umfasst, nämlich ein Telefonieren und/oder ein Empfangen einer E-Mail und/oder ein Senden einer E-Mail und/oder ein Empfangen einer sonstigen Nachricht und/oder ein Senden einer sonstigen Nachricht. Das Unterbinden kann hier im Falle eines Telefonierens durch das Verhindern eines Aufbaus einer Telefonverbindung erfolgen oder bei einer bestehenden Telefonverbindung durch ein Halten oder Beenden besagter Verbindung, beispielsweise in Kombination mit einem Hinweis an die Gesprächsteilnehmer. Das Empfangen einer E-Mail oder einer sonstigen Nachricht kann unterbunden werden, in dem das Empfangen beispielsweise während des Unterbindens nicht angezeigt wird, sondern erst nach einem Beenden des Unterbindens. Ein Senden einer E-Mail oder einer sonstigen Nachricht, was hier auch ein Erstellen einer E-Mail oder einer sonstigen Nachricht umfasst, kann unterbunden werden, in dem ein Weiterschreiben oder Bearbeiten der E-Mail oder sonstigen Nachricht unterbunden wird. Das hat den Vorteil, dass die nachgewiesenen negativen Auswirkungen von Telefonaten sowie von einem Empfangen und Senden beziehungsweise Lesen und Schreiben von Nachrichten während des Fahrens in beanspruchenden Fahrsituationen unterbunden werden und somit die Sicherheit deutlich erhöht wird.

In einer vorteilhaften Ausführungsform ist vorgesehen, dass das Definieren der den Fahrer beanspruchenden Fahrsituation eine Fahrsituation umfasst, in welcher für ein unfallfreies Betreiben des Kraftfahrzeugs von dem Fahrer eine im Vergleich zum durchschnittlich bei dem Betreiben des Kraftfahrzeugs erforderlichen Aufmerksamkeit erhöhte Aufmerksamkeit erforderlich ist. Das hat den Vorteil, dass die grundsätzlich begrenzte Aufmerksamkeit des Fahrers geschont wird und entsprechend eine Überforderung des Fahrers in der beanspruchenden Fahrsituation, beispielsweise durch ein Kommunizieren, welches zusätzliche Aufmerksamkeit erfordert, vermieden wird. Auch damit wird die Sicherheit bei dem Betrieb des Kraftfahrzeugs erhöht.

In einer bevorzugten Ausführungsform ist vorgesehen, dass als die zumindest eine vorgegebene Position eine Position, welche mit einem Gefahrzeichen gemäß einer Straßenverkehrsordnung markiert sein kann, vorgegeben wird, insbesondere eine Kreuzung, dabei insbesondere eine Haltelinie einer Kreuzung, und/oder eine Einmündung, dabei insbesondere eine Haltelinie einer Einmündung, und/oder eine Abzweigung, dabei insbesondere ein Beginn einer Abzweigung, und/oder eine Baustelle, dabei insbesondere ein Beginn einer Baustelle, und/oder eine Position zumindest eines statischen Hindernisses und/oder zumindest einer statischen Gefahrenstelle, insbesondere eine Position eines Gegenstands auf der Fahrbahn und/oder eine Position eines Unfalles, und/oder ein Beginn eines Staus und/oder eine Position einer Witterungsänderung. Alternativ oder ergänzend zu der Position, welche mit einem Gefahrenzeichen gemäß einer Straßenverkehrsordnung markiert sein kann, kann die vorgegebene Position auch eine dynamische Position sein, welche eine den Fahrer beanspruchende Fahrsituation charakterisiert. Diese Fahrsituation kann z.B. ein Überholvorgang sein und als dynamische Position z.B. die Position eines vorausfahrenden Kraftwagens vorgegeben werden. Bei dem Vorgeben dieser Positionen können auch von einem anderen Kraftfahrzeug und/oder von einer Infrastruktur übermittelte verkehrsrelevante Meldungen berücksichtigt werden. Das hat den Vorteil, dass durch die Analyseeinrichtung eine sehr einfache Auswahl der vorgegebenen Positionen erfolgen kann. Die aufgelisteten Typen stellen bekanntermaßen Positionen dar, in denen mit einer den Fahrer des Kraftfahrzeugs beanspruchenden Fahrsituation zu rechnen ist. Die Wahl dieser Positionen bringt also den Vorteil, dass die Sicherheit auf besonders einfache Weise erhöht werden kann.

In einer vorteilhaften Ausführungsform ist vorgesehen, dass die zumindest eine vorgegebene Position, insbesondere ausschließlich, unter Rückgriff auf eine in dem Navigationssystem hinterlegte Karte, vorgegeben wird. Das hat den Vorteil, dass keine weiteren Fahrzeugdaten benötigt werden, um die Sicherheit zu erhöhen. Außerdem kann die Sicherheit so auch erhöht werden, ohne dass das Kraftfahrzeug mit einer externen Kommunikationsquelle, also beispielsweise mit weiteren Kraftfahrzeugen oder einer Infrastruktur oder einem Internetserver kommuniziert.

In einer anderen bevorzugten Ausführungsform ist vorgesehen, dass die erste Entfernung, innerhalb derer das Kommunizieren bei dem Annähern des Kraftfahrzeugs an die vorgegebene Position unterbunden wird, größer ist als die zweite Entfernung, innerhalb derer das Kommunizieren bei dem Entfernen des Kraftfahrzeugs von der vorgegebenen Position unterbunden wird. Insbesondere beträgt hier die zweite Entfernung zwischen 5% und 15% der ersten Entfernung. Das hat den Vorteil, dass der Beanspruchung des Fahrers vor und nach der vorgegebenen Position Rechnung getragen wird und eine größtmögliche Sicherheit mit einer schnellstmöglichen Wiederherstellung einer Kommunikatikonsfähigkeit kombiniert wird.

In einer weiteren Ausführungsform ist vorgesehen, dass die beiden Entfernungen in einer Strecke bemessene Entfernungen sind. Insbesondere kann die erste Entfernung hier zwischen 40 und 50 Metern und die zweite Entfernung zwischen 2 und 7,5 Metern betragen. Das hat den Vorteil, dass die Entfernungen einfach, ohne zusätzliche Informationen aus der augenblicklichen Position des Kraftfahrzeugs und der vorgegebenen Position errechnet werden können. Zudem kann eine Sichtweite des Fahrers so einfach berücksichtigt werden. Die explizit genannten Entfernungen haben sich hier als besonders vorteilhaft erwiesen.

In einer zur im vorherigen Absatz beschriebenen Ausführungsform alternativen Ausführungsform ist vorgesehen, dass die beiden Entfernungen in einer Zeit bemessene Entfernungen sind. Um dies zu ermöglichen erfolgt ein Berücksichten einer Geschwindigkeit des Kraftfahrzeugs bei dem Feststellen der Entfernung der vorgegebenen Position von der augenblicklichen Position des Kraftfahrzeugs. Insbesondere kann die erste Entfernung hier zwischen 4,8 Sekunden und 6 Sekunden und die zweite Entfernung zwischen 0,2 Sekunden und 0,9 Sekunden betragen. Das hat den Vorteil, dass eine Reaktionszeit des Fahrers als kritisches Maß für die Wahl der Entfernungen berücksichtigt werden kann. Die spezifizierten Beträge haben sich hier als vorteilhaft erwiesen.

In einer weiteren vorteilhaften Ausführungsform ist vorgesehen, dass die beiden Entfernungen jeweils an eine augenblickliche Geschwindigkeit des Kraftfahrzeugs und/oder an eine Längsbeschleunigung und/oder an eine Querbeschleunigung und/oder an einen Lenkwinkel und/oder an sonstige Fahrdynamikdaten und/oder an Witterungsbedingungen und/oder an einen Zustand des Fahrers und/oder an von einem anderen Kraftfahrzeug übermittelte verkehrsrelevante Meldungen und/oder an von einer Infrastruktur übermittelte verkehrsrelevante Meldungen angepasst werden. Das hat den Vorteil, dass das Unterbinden der Kommunikation jeweils für jede vorgegebene Position an vorliegende Bedingungen von Umwelt und Fahrzeug sowie an einen Zustand eines Fahrer angepasst werden kann, also die dynamische Natur des Verkehrs und von Situationen berücksichtigt wird. Das hat zur Folge, dass eine größtmögliche Sicherheit und gleichzeitig ein kürzestmögliches Unterbinden des Kommunizierens, also eine geringstmögliche Beeinträchtigung des Fahrerkomforts, erreicht wird.

Die Erfindung betrifft auch ein Kraftfahrzeug mit einer Kommunikationseinrichtung, mit einem mit der Kommunikationseinrichtung gekoppelten Navigationssystem und mit einer Analyseeinrichtung. Dabei ist die Analyseeinrichtung ausgelegt, zumindest eine Position vorzugeben, an welcher eine gemäß einer vorgegebenen Definition den Fahrer des Kraftfahrzeugs beanspruchende Fahrsituation erwartet wird. Ferner ist die Analyseeinrichtung ausgelegt, eine Entfernung des Kraftfahrzeugs von der vorgegebenen Position, sowie ob ein Annähern und/oder ob ein Entfernen des Kraftfahrzeugs von der vorgegebenen Position erfolgt, festzustellen. Schließlich ist die Analyseeinrichtung ausgelegt zu überprüfen, ob die festgestellte Entfernung kleiner ist als eine erste vorbestimmte Entfernung, falls das Kraftfahrzeug sich an die vorgegebene Position annähert und ob die festgestellte Entfernung kleiner ist als eine zweite vorbestimmt Entfernung, falls das Kraftfahrzeug sich von der vorgegebenen Position entfernt. Die Kommunikationseinrichtung ist ausgelegt, ein Kommunizieren über die Kommunikationseinrichtung zu unterbinden, falls die festgestellte Entfernung des Kraftfahrzeugs von der vorgegebenen Position kleiner als die erste oder die zweite Entfernung ist. Vorteile und vorteilhafte Ausführungsformen entsprechen den Vorteilen und vorteilhaften Ausführungsformen des beschriebenen Verfahrens.

Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in der Figur nicht explizit gezeigt und erläutert sind, jedoch durch separierte Merkmalskombinationen aus den erläuterten Ausführungen hervorgehen und erzeugbar sind.

Ein Ausführungsbeispiel der Erfindung wird nachfolgend anhand einer schematischen Zeichnung näher erläutert. Dabei illustriert die einzige Fig. die Funktionsweise einer beispielhafte Ausführungsform des Verfahrens anhand einer schematischen Darstellung einer vorgegebenen Position, an welcher eine den Fahrer des Kraftfahrzeugs beanspruchende Fahrsituation erwartet wird.

Die Fig. illustriert die Funktionsweise einer beispielhaften Ausführungsform des Verfahrens. Vorliegend umfasst das Definieren einer einen Fahrer eines Kraftfahrzeugs beanspruchenden Fahrsituation eine Fahrsituation, in welcher für ein unfallfreies Betreiben des Kraftfahrzeugs von dem Fahrer eine im Vergleich zur durchschnittlich, bei dem Betreiben des Kraftfahrzeugs erforderlichen Aufmerksamkeit, erhöhte Aufmerksamkeit erforderlich ist. Im gezeigten Beispiel ist das ein Abbiegen, hier nach links, beispielsweise in eine Vorfahrtsstraße aus einer untergeordneten Straße. Als Position, an welcher diese den Fahrer beanspruchende Fahrsituation erwartet wird, wird vorliegend die Haltelinie der einmündenden Straße vorgegeben. Die Positionsinformationen können beispielsweise aus Streckendaten eines Navigationssystems des Kraftfahrzeugs V bezogen werden, welche von einer Analyseeinrichtung des Kraftfahrzeugs V analysiert werden. Es wird nun durch die Analyseeinrichtung eine Entfernung d des Kraftfahrzeugs V von der vorgegebenen Position P festgestellt. Gleichzeitig wird durch die Analyseeinrichtung festgestellt, ob ein Annähern oder ein Entfernen des Kraftfahrzeugs V von der vorgegebenen Position P erfolgt. Im gezeigten Beispiel befindet sich das Kraftfahrzeug V an einer ersten Position x₁ und nähert sich an die vorgegebene Position P, hier die Haltelinie an. In diesem Fall überprüft die Analyseeinrichtung, ob die festgestellte Entfernung d des Kraftfahrzeugs V von der vorgegebenen Position P kleiner ist als eine erste vorbestimmte Entfernung D1. Diese kann beispielsweise 45 Meter betragen. Dies ist in der Fig. dargestellten Situation für die erste Position x₁ nicht der Fall. Entsprechend wird hier ein Kommunizieren über die Kommunikationseinrichtung an der ersten Position x₁ des Kraftfahrzeugs V nicht unterbunden. Der Fahrer kann also beispielsweise über ein mit der Kommunikationseinrichtung über eine Datenverbindung gekoppeltes Mobiltelefon telefonieren sowie Nachrichten senden und/oder empfangen.

Nähert sich das Kraftfahrzeug V nun der vorgegebenen Position P, so wird das Feststellen und Überprüfen der Entfernung des Kraftfahrzeugs V von der vorgegebenen Position P, welches insbesondere fortlaufend erfolgen kann, an einer zweiten Position x₂ des Kraftfahrzeugs V das Ergebnis liefern, dass die Entfernung d des Kraftfahrzeugs V von der vorgegebenen Position P kleiner ist, als die erste vorbestimmte Entfernung D1. Sobald dies festgestellt wird, erfolgt hier ein Unterbinden des Kommunizierens über die Kommunikationseinrichtung. Es können somit vorliegend keine neuen Telefonate, hier über das mit der Kommunikationseinrichtung gekoppelte Mobiltelefon, aufgebaut werden und auch bestehende Telefonate können mit einem Hinweis für die beteiligten Personen unterbrochen beziehungsweise gehalten werden. Ein Erstellen von Nachrichten, beispielsweise E-Mail oder SMS, wird mit Erreichen der zweiten Position x₂ pausiert. Ein Empfangen ebensolcher Nachrichten wird nicht angezeigt beziehungsweise verzögert, so dass der Fahrer durch die Benachrichtigungen nicht abgelenkt wird.

Schließlich erreicht das Kraftfahrzeug V die vorgegebene Position P und lässt diese, vorliegend durch ein Linksabbiegen des Kraftfahrzeugs V, hinter sich. So erreicht das Kraftfahrzeug V eine dritte Position x₃, welche von der ersten Position x₁ und der zweiten Position x₂ betrachtet hinter der vorgegebenen Position P liegt. Entsprechend ergibt das Feststellen der Entfernung d des Kraftfahrzeugs V, ob ein Annähern oder ein Entfernen des Kraftfahrzeugs V von der vorgegebenen Position P erfolgt, so dass das Kraftfahrzeug V sich von der vorgegebenen Position P entfernt. In Folge wird durch die Analyseeinrichtung überprüft, ob die an der dritten Position x₃ festgestellte Entfernung d kleiner ist als eine zweite vorbestimmt Entfernung D2. Diese kann beispielsweise 5 Meter betragen. Im gezeigten Beispiel ist dies der Fall, so dass auch an der dritten Position x₃ ein Kommunizieren über die Kommunikationseinrichtung durch die Kommunikationseinrichtung noch unterbunden wird. In Abhängigkeit von der Wahl des Betrags für die zweite Entfernung D2 und der Geschwindigkeit des Kraftfahrzeugs V, wird jedoch das Feststellen der Entfernung beziehungsweise Überprüfen der Entfernung früher oder später ergeben, dass die festgestellte Entfernung d des Kraftfahrzeugs V von der vorgegebenen Position P größer ist, als die zweite vorbestimmt Entfernung D2. Wenn dies der Fall ist, wird das Unterbinden des Kommunizierens beendet. Dies ist beispielsweise an der vierten Position x₄ der Fall. Dort wird das Kommunizieren nicht mehr unterbunden, so dass der Fahrer wieder uneingeschränkt die Funktionen des mit der Kommunikationseinrichtung gekoppelten Mobiltelefons nutzen kann. Es ist auch möglich, den Funktionsumfang des Mobiltelefons hier innerhalb der ersten und zweiten Entfernung D1, D2 nur teilweise einzuschränken, beispielsweise ein Telefonieren zu unterbinden, jedoch ein Empfangen einer Nachricht zu erlauben oder aber beliebige andere Kombinationen unterschiedlicher Funktionalitäten zu erlauben beziehungsweise zu unterbinden. So ist es insbesondere auch möglich, innerhalb der betreffenden Entfernungen nur Anrufe einer vorbestimmten Anrufergruppe, sogenannter "Favoriten", durch die Kommunikationseinrichtung zu dem Fahrer durchzustellen oder durchzulassen.

Zusammenfassend lässt sich also feststellen, dass die Sicherheit bei dem Betreiben des Kraftfahrzeugs V erhöht wird, in dem in einem vorbestimmten Streckenabschnitt B, welcher sich um eine vorbestimmte Position P erstreckt, das Kommunizieren unterbunden wird. Außerhalb dieses Streckenabschnitts B hingegen, in weiteren Streckenabschnitten A kann der Fahrer unbeeinträchtigt durch die Kommunikationseinrichtung kommunizieren. Dabei ist der Streckenabschnitt B entsprechend der ersten und zweiten Entfernung D1, D2 unterteilt. Vorliegend erstreckt sich der Streckenabschnitt B vor allem in einen Bereich vor der vorgegebenen Position P, da die erste Entfernung D1 größer ist als die zweite Entfernung D2.

## Patentansprüche

1. Verfahren zum Betreiben eines Kraftfahrzeugs (V) mit einer Kommunikationseinrichtung, mit einem mit der Kommunikationseinrichtung gekoppelten Navigationssystem sowie mit einer Analyseeinrichtung, mit den Schritten:
a) Definieren einer einen Fahrer des Kraftfahrzeugs (V) beanspruchenden Fahrsituation in Abhängigkeit einer Position (x₁, x₂, x₃, x₄) des Kraftfahrzeugs (V);
b) Vorgeben zumindest einer Position (P), an welcher eine den Fahrer des Kraftfahrzeugs (V) beanspruchende Fahrsituation erwartet wird, durch die Analyseeinrichtung;
c) Feststellen einer Entfernung (d) des Kraftfahrzeugs (V) von der vorgegebenen Position (P), sowie ob ein Annähern des Kraftfahrzeugs (V) an die vorgegebene Position (P) erfolgt, durch die Analyseeinrichtung;
d) Überprüfen, ob die festgestellte Entfernung (d) kleiner ist als eine erste vorbestimmte Entfernung (D1), falls das Kraftfahrzeug (V) sich an die vorgegebene Position (P) annähert, durch die Analyseeinrichtung; und
e) Unterbinden eines Kommunizierens über die Kommunikationseinrichtung durch die Kommunikationseinrichtung, falls die festgestellte Entfernung (d) kleiner als die erste Entfernung (D1) ist,
**dadurch gekennzeichnet, dass**
in Schritt c) durch die Analyseeinrichtung auch festgestellt wird, ob ein Entfernen des Kraftfahrzeugs (V) von der vorgegebenen Position (P) erfolgt, und dass
in Schritt d) durch die Analyseeinrichtung auch überprüft wird, ob die festgestellte Entfernung (d) kleiner ist als eine zweite vorbestimmte Entfernung (D2), falls das Kraftfahrzeug (V) sich von der vorgegebenen Position (P) entfernt, und dass
in Schritt e) das Kommunizieren über die Kommunikationseinrichtung durch die Kommunikationseinrichtung unterbunden wird, falls die festgestellte Entfernung (d) kleiner ist als die zweite Entfernung (D2).

2. Verfahren nach Anspruch 1,
**dadurch gekennzeichnet, dass**
die Kommunikationseinrichtung über eine Datenübertragungsschnittstelle mit einem, insbesondere nicht fest im Kraftfahrzeug (V) eingebauten, Mobiltelefon gekoppelt ist und insbesondere eine Freisprecheinrichtung umfasst.

3. Verfahren nach einem der vorhergehenden Ansprüche,
**dadurch gekennzeichnet, dass**
das Kommunizieren zumindest eine der folgenden Aktivitäten umfasst: ein Telefonieren und/oder ein Empfangen einer Email und/oder ein Senden einer Email und/oder ein Empfangen einer sonstigen Nachricht und/oder ein Senden einer sonstigen Nachricht.

4. Verfahren nach einem der vorhergehenden Ansprüche,
**dadurch gekennzeichnet, dass**
das Definieren der den Fahrer des Kraftfahrzeugs (V) beanspruchenden Fahrsituation eine Fahrsituation umfasst, in welcher für ein unfallfreies Betreiben des Kraftfahrzeugs (V) von dem Fahrer eine im Vergleich zur durchschnittlich bei dem Betreiben des Kraftfahrzeugs (V) erforderlichen Aufmerksamkeit erhöhte Aufmerksamkeit erforderlich ist.

5. Verfahren nach einem der vorhergehenden Ansprüche,
**dadurch gekennzeichnet, dass**
als die zumindest eine vorgegebene Position (P) eine Position, welche mit einem Gefahrzeichen markiert sein kann, vorgegeben wird, insbesondere eine Kreuzung, insbesondere eine Haltelinie einer Kreuzung, und/oder eine Einmündung, insbesondere eine Haltelinie einer Einmündung, und/oder eine Abzweigung oder Ausfahrt, insbesondere ein Beginn einer Abzweigung oder Ausfahrt, und/oder eine statische Gefahrstelle, insbesondere eine Baustelle, dabei insbesondere ein Beginn einer Baustelle, und/oder eine Position zumindest eines Gegenstands auf der Fahrbahn und/oder eine Position eines Unfalles, und/oder ein Beginn eines Staus und/oder eine Position einer Witterungsänderung und/oder eine den Fahrer beanspruchende Fahrsituation charakterisierende dynamische Position, insbesondere die Position eines weiteren Kraftwagens.

6. Verfahren nach einem der vorhergehenden Ansprüche,
**dadurch gekennzeichnet, dass**
die zumindest eine vorgegebene Position (P), insbesondere ausschließlich, unter Rückgriff auf eine in dem Navigationssystem hinterlegte Karte vorgegeben wird.

7. Verfahren nach einem der vorhergehenden Ansprüche,
**dadurch gekennzeichnet, dass**
die erste Entfernung (D1), innerhalb derer das Kommunizieren bei dem Annähern des Kraftfahrzeugs (V) an die vorgegebenen Position (P) unterbunden wird, größer ist als die zweite Entfernung (D2), innerhalb derer das Kommunizieren bei dem Entfernen des Kraftfahrzeugs (V) von der vorgegebenen Position (P) unterbunden wird, insbesondere die zweite Entfernung (D2) zwischen 5% und 15% der ersten Entfernung (D1) beträgt.

8. Verfahren nach einem der vorhergehenden Ansprüche,
**dadurch gekennzeichnet, dass**
die beiden Entfernungen (D1, D2) in einer Strecke bemessene Entfernungen sind, insbesondere die erste Entfernung (D1) zwischen 40m und 50m und die zweite Entfernung (D2) zwischen 2m und 7,5m beträgt.

9. Verfahren nach einem der Ansprüche 1 bis 7,
**dadurch gekennzeichnet, dass**
die beiden Entfernungen (D1, D2) unter Berücksichtigung einer Geschwindigkeit des Kraftfahrzeugs (V) in einer Zeit bemessene Entfernungen sind, insbesondere die erste Entfernung (D1) zwischen 4,8s und 6,0s und die zweite Entfernung (D2) zwischen 0,2s und 0,9s beträgt.

10. Verfahren nach einem der vorhergehenden Ansprüche,
**dadurch gekennzeichnet, dass**
die beiden Entfernungen (D1, D2) an eine augenblickliche Geschwindigkeit des Kraftfahrzeugs (V) und/oder an eine Längsbeschleunigung und/oder an eine Querbeschleunigung und/oder an einen Lenkwinkel und/oder an sonstige Fahrdynamikdaten und/oder an Witterungsbedingungen und/oder an einen Zustand des Fahrers und/oder an von einem anderen Kraftfahrzeug (V) übermittelte verkehrsrelevante Meldungen und/oder an von einer Infrastruktur übermittelte verkehrsrelevante Meldungen angepasst werden.

11. Kraftfahrzeug (V) mit einer Kommunikationseinrichtung, mit einem mit der Kommunikationseinrichtung gekoppelten Navigationssystem und mit einer Analyseeinrichtung, wobei
- die Analyseeinrichtung ausgelegt ist,
a) zumindest eine Position (P) vorzugeben, an welcher eine gemäß einer vorgegebenen Definition den Fahrer des Kraftfahrzeugs (V) beanspruchende Fahrsituation erwartet wird;
b) eine Entfernung des Kraftfahrzeugs (V) von der vorgegebenen Position (P), sowie ob ein Annähern des Kraftfahrzeugs (V) von der vorgegebenen Position (P) erfolgt, festzustellen;
c) zu überprüfen, ob die festgestellte Entfernung (d) kleiner ist als eine erste vorbestimmte Entfernung (D1), falls das Kraftfahrzeug (V) sich an die vorgegebene Position (P) annähert, sowie
- die Kommunikationseinrichtung ausgelegt ist, ein Kommunizieren über die Kommunikationseinrichtung zu unterbinden, falls die festgestellte Entfernung (d) des Kraftfahrzeugs (V) von der vorgegebenen Position (P) kleiner als die erste Entfernung (D1) ist,
**dadurch gekennzeichnet, dass**
die Analyseeinrichtung auch dazu ausgelegt ist,
b) festzustellen, ob ein Entfernen des Kraftfahrzeugs (V) von der vorgegebenen Position (P) erfolgt,
c) zu überprüfen, ob die festgestellte Entfernung (d) kleiner ist als eine zweite vorbestimmte Entfernung (D2), falls das Kraftfahrzeug (V) sich von der vorgegebenen Position (P) entfernt, und
die Kommunikationseinrichtung ausgelegt ist, ein Kommunizieren über die Kommunikationseinrichtung zu unterbinden, falls die Entfernung (d) des Kraftfahrzeugs (V) von der vorgegebenen Position (P) kleiner als die zweite Entfernung (D2) ist.

## Claims

1. Method for operating a motor vehicle (V) having a communication device, having a navigation system coupled to the communication device and also having an analysis device, with the steps:
a) definition of a driving situation making demands on a driver of the motor vehicle (V) on the basis of a position (x₁, x₂, x₃, x₄) of the motor vehicle (V);
b) specification, by the analysis device, of at least one position (P) at which a driving situation making demands on the driver of the motor vehicle (V) is expected;
c) establishing, by the analysis device, of a distance (d) of the motor vehicle (V) from the specified position (P), and of whether the motor vehicle (V) is approaching the specified position (P);
d) checking, by the analysis device, of whether the established distance (d) is shorter than a first predetermined distance (D1), if the motor vehicle (V) is approaching the specified position (P); and
e) prevention of communication via the communication device by the communication device, if the established distance (d) is shorter than the first distance (D1), **characterised in that**
it is also established by the analysis device in step c), whether a distancing of the motor vehicle (V) from the specified position (P) takes place, and that
in step d) the analysis device also checks, whether the established distance (d) is shorter than a second predetermined distance (D2), if the motor vehicle (V) is moving away from the specified position (P), and that
in step e) the communication via the communication device by the communication device is prevented, if the established distance (d) is shorter than the second distance (D2).

2. Method according to claim 1,
**characterised in that**
the communication device is coupled via a data transmission interface with a mobile telephone, more particularly one not built in permanently in the motor vehicle (V) and more particularly a hands-free device.

3. Method according to any one of the preceding claims,
**characterised in that**
the communication comprises one of the following activities: telephoning and/or receiving of an e-mail and/or sending of an e-mail and/or receiving of any other message and/or sending of any other message.

4. Method according to any one of the preceding claims,
**characterised in that**
the defining of the driving situation making demands on the driver of the motor vehicle (V) comprises a driving situation, in which, for accident-free operation of the motor vehicle (V), a greater level of attentiveness is required of the driver in comparison with the average attentiveness required for the operation of the motor vehicle (V).

5. Method according to any one of the preceding claims,
**characterised in that**
a position, which can be marked with a hazard symbol, is specified as the at least one specified position (P), said position being more particularly a crossroad, more particularly a stop line at a crossroad, and/or a junction, more particularly a stop line at a junction, and/or a turn-off or exit, more particularly a start of a turn-off or exit, and/or a static danger spot, more particularly a construction site, more particularly a start of a construction site, and/or a position of at least one object on the carriageway and/or a position of an accident, and/or a start of a holdup and/or a position of a change of weather and/or a dynamic position characterising a driving situation making demands on the driver, more particularly the position of a further motor vehicle.

6. Method according to any one of the preceding claims,
**characterised in that**
the at least one specified position (P) is specified, more particularly exclusively, with recourse to a map stored in the navigation system.

7. Method according to any one of the preceding claims,
**characterised in that**
the first distance (D1), within which communicating is prevented during the approach of the motor vehicle (V) to the specified position (P), is greater than the second distance (D2), within which communicating is prevented during the moving-away of the motor vehicle (V) from the specified position (P), more particularly the second distance (D2) is between 5% and 15% of the first distance (D1).

8. Method according to any one of the preceding claims,
**characterised in that**
the two distances (D1, D2) are distances measured in a stretch of road, more particularly the first distance (D1) is between 40m and 50m and the second distance (D2) is between 2m and 7.5m.

9. Method according to any one of claims 1 to 7,
**characterised in that**
the two distances (D1, D2) are distances measured in a time, taking into account a speed of the motor vehicle (V), more particularly the first distance (D1) is between 4.8s and 6.0s and the second distance (D2) is between 0.2s and 0.9s.

10. Method according to any one of the preceding claims,
**characterised in that**
the two distances (D1, D2) are adjusted to a momentary speed of the motor vehicle (V) and/or to a longitudinal acceleration and/or to a lateral acceleration and/or to a steering angle and/or to other vehicle-dynamic data and/or to weather conditions and/or to a state of the driver and/or to traffic-related reports transmitted from another motor vehicle (V) and/or to traffic-related reports transmitted from an infrastructure.

11. Motor vehicle (V) having a communication device, having a navigation system coupled to the communication device and having an analysis device, wherein
- the analysis device is designed
a) to specify at least one position (P), at which a driving situation making demands on the driver of the motor vehicle (V) according to a specified definition is expected;
b) to establish a distance of the motor vehicle (V) from the specified position (P), and also whether an approach of the motor vehicle (V) from the specified position (P) takes place;
c) to check, whether the established distance (d) is shorter than a first predetermined distance (D1), if the motor vehicle (V) is approaching the specified position (P), and also
- the communication device is designed to prevent communicating via the communication device, if the established distance (d) of the motor vehicle (V) from the specified position (P) is shorter than the first distance (D1),
**characterised in that**
the analysis device is also designed
b) to establish, whether a moving-away of the motor vehicle (V) from the specified position (P) takes place,
c) to check, whether the established distance (d) is shorter than a second predetermined distance (D2), if the motor vehicle (V) is moving away from the specified position (P), and the communication device is designed to prevent communicating via the communication device, if the distance (d) of the motor vehicle (V) from the specified position (P) is shorter than the second distance (D2).

## Revendications

1. Procédé servant à faire fonctionner un véhicule automobile (V) avec un dispositif de communication, avec un système de navigation couplé au dispositif de communication ainsi qu'avec un dispositif d'analyse, avec les étapes de :
a) définition d'une situation de conduite sollicitant un conducteur du véhicule automobile (V) en fonction d'une position (x₁, x₂, x₃, x₄) du véhicule automobile (V) ;
b) spécification par le dispositif d'analyse d'au moins une position (P), à laquelle une situation de conduite sollicitant le conducteur du véhicule automobile (V) est attendue ;
c) relevé par le dispositif d'analyse d'un éloignement (d) du véhicule automobile (V) de la position (P) spécifiée, et pour savoir si un rapprochement du véhicule automobile (V) de la position (P) spécifiée a lieu ;
d) vérification par le dispositif d'analyse pour savoir si l'éloignement (d) relevé est inférieur à un premier éloignement (D1) prédéterminé dans le cas où le véhicule automobile (V) se rapproche de la position (P) spécifiée ; et
e) empêchement d'une communication par l'intermédiaire du dispositif de communication par le dispositif de communication si l'éloignement (d) relevé est inférieur au premier éloignement (D1),
**caractérisé en ce que**
lors de l'étape c), le dispositif d'analyse permet également de relever si un éloignement du véhicule automobile (V) de la position (P) spécifiée a lieu, et que lors de l'étape d), le dispositif d'analyse permet de vérifier également si l'éloignement (d) relevé est inférieur au deuxième éloignement (D2) prédéterminé dans le cas où le véhicule automobile (V) se rapproche de la position (P) spécifiée, et que lors de l'étape e), la communication par l'intermédiaire du dispositif de communication est empêchée par le dispositif de communication dans le cas où l'éloignement (d) relevé est inférieur au deuxième éloignement (D2).

2. Procédé selon la revendication 1,
**caractérisé en ce que**
le dispositif de communication est couplé à un téléphone mobile en particulier monté de manière non solidaire dans le véhicule automobile (V) par l'intermédiaire d'une interface de transfert de données et comprend en particulier un dispositif mains libres.

3. Procédé selon l'une quelconque des revendications précédentes,
**caractérisé en ce que**
la communication comprend au moins une des activités suivantes : un passage d'appel téléphonique et/ou une réception d'un courrier électronique et/ou un envoi d'un courrier électronique et/ou une réception d'un tout autre message et/ou un envoi d'un tout autre message.

4. Procédé selon l'une quelconque des revendications précédentes,
**caractérisé en ce que**
la définition de la situation de conduite sollicitant le conducteur du véhicule automobile (V) comprend une situation de conduite, dans laquelle une attention élevée en comparaison avec l'attention requise en moyenne lors du fonctionnement du véhicule automobile (V) est requise pour un fonctionnement du véhicule automobile (V) sans accident.

5. Procédé selon l'une quelconque des revendications précédentes,
**caractérisé en ce que**
est spécifiée en tant que l'au moins une position (P) spécifiée une position, qui peut être marquée par un signal d'avertissement de danger, en particulier une intersection, en particulier une ligne d'arrêt d'une intersection, et/ou une jonction, en particulier une ligne d'arrêt d'une jonction, et/ou une bifurcation ou une sortie, en particulier un début d'une bifurcation ou d'une sortie, et/ou un emplacement dangereux statique, en particulier un chantier, dans ce cadre en particulier un début d'un chantier, et/ou une position d'au moins un objet sur la chaussée et/ou une position d'un accident, et/ou un début d'un embouteillage et/ou une position d'une variation météorologique et/ou une position dynamique caractérisant la situation de conduite sollicitant le conducteur, en particulier la position d'un autre véhicule à moteur.

6. Procédé selon l'une quelconque des revendications précédentes,
**caractérisé en ce que**
l'au moins une position (P) spécifiée est spécifiée, en particulier exclusivement, en recourant à une carte enregistrée dans le système de navigation.

7. Procédé selon l'une quelconque des revendications précédentes,
**caractérisé en ce que**
le premier éloignement (D1), à l'intérieur duquel la communication est empêchée lors du rapprochement du véhicule automobile (V) de la position (P) spécifiée, est plus grand que le deuxième éloignement (D2), à l'intérieur duquel la communication est empêchée lors de l'éloignement du véhicule automobile (V) de la position (P) spécifiée, en particulier le deuxième éloignement (D2) présente une valeur comprise entre 5 % et 15 % du premier éloignement (D1).

8. Procédé selon l'une quelconque des revendications précédentes,
**caractérisé en ce que**
les deux éloignements (D1, D2) sont des éloignements mesurés sur un tronçon, en particulier le premier éloignement (D1) présente une valeur comprise entre 40 m et 50 m et le deuxième éloignement (D2) présente une valeur comprise entre 2 m et 7,5 m.

9. Procédé selon l'une quelconque des revendications 1 à 7,
**caractérisé en ce que**
les deux éloignements (D1, D2) sont des éloignements mesurés pendant une période en tenant compte d'une vitesse du véhicule automobile (V), en particulier le premier éloignement (D1) présente une valeur comprise entre 4,8 s et 6,0s et le deuxième éloignement (D2) présente une valeur comprise entre 0,2 s et 0,9 s.

10. Procédé selon l'une quelconque des revendications précédentes,
**caractérisé en ce que**
les deux éloignements (D1, D2) sont adaptés à une vitesse actuelle du véhicule automobile (V) et/ou à une accélération longitudinale et/ou à une accélération transversale et/ou à un angle de braquage et/ou à d'autres données dynamiques de conduite et/ou à des conditions météorologiques et/ou à un état du conducteur et/ou à des alertes importantes en termes de trafic transmises par un autre véhicule automobile (V) et/ou à des alertes importantes en termes de trafic transmises par une infrastructure.

11. Véhicule automobile (V) avec un dispositif de communication, avec un système de navigation couplé au dispositif de communication et avec un dispositif d'analyse, dans lequel
- le dispositif d'analyse est configuré
a) pour spécifier au moins une position (P), à laquelle une situation de conduite sollicitant selon une définition spécifiée le conducteur du véhicule automobile (V) est attendue ;
b) pour relever un éloignement du véhicule automobile (V) de la position (P) spécifiée, ainsi pour savoir si un rapprochement du véhicule automobile (V) de la position (P) spécifiée a lieu ;
c) pour surveiller si l'éloignement (d) relevé est inférieur à un premier éloignement (D1) prédéterminé dans le cas où le véhicule automobile (V) se rapproche de la position (P) spécifiée, ainsi que
- le dispositif de communication est configuré pour empêcher une communication par l'intermédiaire du dispositif de communication dans le cas où l'éloignement (d) relevé du véhicule automobile (V) de la position (P) spécifiée est inférieur au premier éloignement (D1),
**caractérisé en ce que**
le dispositif d'analyse est configuré également
b) pour relever si un éloignement du véhicule automobile (V) de la position (P) spécifiée a lieu,
c) pour vérifier si l'éloignement (d) relevé est inférieur à un deuxième éloignement (D2) prédéterminé dans le cas où le véhicule automobile (V) s'éloigne de la position (P) spécifiée, et
le dispositif de communication est configuré pour empêcher une communication par l'intermédiaire du dispositif de communication dans le cas où l'éloignement (d) du véhicule automobile (V) de la position (P) spécifiée est inférieur au deuxième éloignement (D2).
